# FASCICULE DE BREVET EUROPEEN

(11) **EP 3 871 942 B1**
(45) Date de publication et mention de la délivrance du brevet: **19.10.2022**
(21) Numéro de dépôt: 21156913.2
(22) Date de dépôt: 12.02.2021
(51) Int. Cl.: B61D 17/04, B62D 33/00, B61D 17/00

(54) **CAISSE DE VÉHICULE FERROVIAIRE ET PROCÉDÉ ASSOCIÉ**
KAROSSERIE EINES SCHIENENFAHRZEUGS UND ENTSPRECHENDES VERFAHREN
RAILWAY VEHICLE BODY AND ASSOCIATED METHOD

(30) Priorité: 14.02.2020 FR 2001484
(43) Date de publication de la demande: 01.09.2021
(73) Titulaire: ALSTOM Transport Technologies, 93400 Saint-Ouen (FR); Ecole Nationale Supérieure des Arts et Industries Textiles (ENSAIT), 59100 Roubaix (FR)
(72) Inventeur: CAMPUS, Emigliano, 17340 YVES (FR); GHYS, Pascal, 78480 VERNEUIL-SUR-SEINE (FR); NAGUIB, Younes, 75019 PARIS (FR); BOUSSU, François, 59190 CAESTRE (FR); DUFOUR, Clément, 60000 BEAUVAIS (FR); LEGRAND, Xavier, 59491 VILLENEUVE D'ASCQ (FR)
(74) Mandataire: Lavoix

(56) Documents cités:
- DE-A1- 10 053 125
- DE-A1-102007 022 198
- GB-A- 972 405
- JP-A- 2001 171 514
- US-A- 972 467

## Description

La présente invention concerne une caisse de véhicule ferroviaire, la caisse comprenant une armature ajourée comprenant des tubes longitudinaux, des tubes de liaison croisant les tubes longitudinaux et des raccords connectant des tubes longitudinaux et des tubes de liaison, la caisse comprenant en outre des parements s'étendant entre les tubes longitudinaux et les tubes de liaison.

L'invention s'applique notamment aux véhicules ferroviaires du type métro, train régional, tramway, train de marchandises et autres.

Le document DE 10 2007 022198 A1 décrit un kit pour une structure de caisse.

Par « caisse », on entend une structure définissant un espace intérieur à la caisse destiné à recevoir des occupants du véhicule ferroviaire et/ou des équipements, et un espace extérieur à la caisse. La caisse est supportée par un élément de base qui est relié à des bogies du véhicule ferroviaire. L'élément de base définit un plancher de l'espace intérieur. Les caisses de véhicule ferroviaire sont généralement formées de poutres et de traverses d'éléments en métal ou en alliages métalliques. Pour former la caisse, les poutres et les traverses métalliques sont, par exemple, soudés entre eux.

Cependant, les caisses métalliques présentent un poids élevé ce qui augmente le coût d'opération du véhicule ferroviaire, et altère les installations au sol.

Pour réduire le poids du véhicule ferroviaire, GB 972405 propose de former des éléments de la caisse en matériau polymère. Ce document décrit un procédé pour obtenir des éléments structurels, tels que des longerons et des traverses, par pressage du matériau polymère dans des moules prévus à cet effet.

Une telle solution ne donne pas entière satisfaction. En effet, la taille et la forme de la caisse du véhicule ferroviaire ne sont pas facilement adaptables d'un véhicule à l'autre afin de satisfaire aux exigences de gabarit du véhicule, et d'adapter le nombre et la forme des fenêtres et des portes définies dans la caisse.

Le procédé tel que décrit dans GB 972405 rend difficile et coûteux la formation des éléments de caisse de taille et de forme variable. Par exemple, il est nécessaire de fournir un moule spécifique pour chaque variation de forme ou taille d'un élément de caisse.

Un but de l'invention est donc de disposer une caisse dont la taille et la forme sont facilement adaptables, tout en étant légère et facile à fabriquer.

À cet effet, l'invention a pour objet une caisse du type précité, dans laquelle les tubes longitudinaux et les tubes de liaison comportent des fils fusibles assemblés entre eux par chauffage.

La caisse selon l'invention peut comprendre l'une ou plusieurs des caractéristiques suivantes, prise(s) isolément ou suivant toute combinaison techniquement possible :
- les tubes longitudinaux et les tubes de liaison comprennent des fils structurants non fusibles, les fils structurants étant distincts des fils fusibles.
- les fils fusibles sont des fils de polymère thermoplastique, et les fils structurants comprennent des fibres inorganiques appartenant au moins à l'un des éléments du groupe constitué par des fibres de verre, des fibres de carbone, et des fibres de basalte.
- Les fils fusibles sont agencés en une pluralité de couches tissées et/ou tressées.
- Au moins un tube parmi les longitudinaux et les tubes de liaison présente une section circulaire.
- Le raccord comprend une première partie de raccordement d'un premier tube parmi les tubes longitudinaux et les tubes de liaison, la première partie de raccordement formant une gorge configurée pour recevoir un deuxième tube parmi les tubes longitudinaux et les tubes de liaison.
- Le deuxième tube comprend au moins une deuxième partie de raccordement formant une gorge complémentaire configurée pour recevoir la première partie de raccordement au niveau de la gorge.
- Le raccord comprend au moins une interconnexion des tubes longitudinaux et des tubes de liaison, l'interconnexion définissant au moins une poche recevant une extrémité d'un tube longitudinal et au moins une poche additionnelle recevant une extrémité d'un tube de liaison.
- L'interconnexion présente une surface de fixation de parement, sur laquelle un parement est monté.
- L'interconnexion est formée par tissage d'un fil de trame selon une première direction, et d'un fil de chaîne selon une deuxième direction.
- L'interconnexion est formée de fils d'au moins deux matériaux différents.
- Les parements sont connectés aux tubes longitudinaux et/ou aux tubes de liaison par des éléments de clipage.
- Les fils fusibles sont des fils de polymère thermoplastique.
- Les fils structurants comprennent des fibres inorganiques appartenant au moins à l'un des éléments du groupe constitué par des fibres de verre, des fibres de carbone, et des fibres de basalte.
- Les fils structurants comprennent des fibres polymères organiques.
   L'invention a également pour objet un procédé de production d'une caisse de véhicule ferroviaire, le procédé comprenant une phase d'assemblage comprenant :
   - une étape de fourniture de tubes longitudinaux et de tubes de liaison réalisés de fils fusibles assemblés entre eux par chauffage,
   - une étape de connexion des tubes longitudinaux avec des tubes de liaison au niveau de raccords pour former une armature ajourée, et
   - une étape de fixation de parements entre les tubes longitudinaux et les tubes de liaison.

Le procédé selon l'invention peut comprendre l'une ou plusieurs des caractéristiques suivantes, prise(s) isolément ou suivant toute combinaison techniquement possible :
- le procédé comprend une phase initiale de production des tubes longitudinaux et des tubes de liaison comprenant :
   + une étape d'assemblage des fils fusibles,
   + une étape de chauffage des fils fusibles,
   + une étape de découpe des tubes à longueur.
- le raccord comprend une première partie de raccordement d'un premier tube parmi les tubes longitudinaux et les tubes de liaison, la première partie de raccordement formant une gorge configurée pour recevoir un deuxième tube parmi les tubes longitudinaux et les tubes de liaison, lors de l'étape de connexion, la gorge reçoit un deuxième tube parmi les tubes longitudinaux et les tubes de liaison.

L'invention sera mieux comprise à la lecture de la description qui va suivre, donnée uniquement à titre d'exemple, et faite en se référant aux dessins annexés, sur lesquels :
[Fig 1] La Figure 1 est une représentation schématique en perspective de l'armature d'une caisse selon l'invention ;
[Fig 2] La Figure 2 est une représentation schématique en perspective d'un tube comprenant une partie de raccordement ;
[Fig 3] La Figure 3 est une représentation schématique en perspective d'un raccord entre deux tubes ;
[Fig 4] La Figure 4 est une représentation schématique en perspective d'une partie de la caisse ;
[Fig 5] La Figure 5 est une représentation schématique en perspective d'une interconnexion entre des tubes ; et
[Fig 6] La Figure 6 est un ordinogramme d'un procédé de production d'une caisse.

Dans la suite de la description, l'expression « sensiblement égal à » s'entend généralement par une relation d'égalité à plus ou moins 10%, de préférence à plus ou moins 5%. En outre, l'expression « sensiblement perpendiculaire à » s'entend par une relation de perpendicularité généralement à plus ou moins 10 degrés, de préférence à plus ou moins 5 degrés.

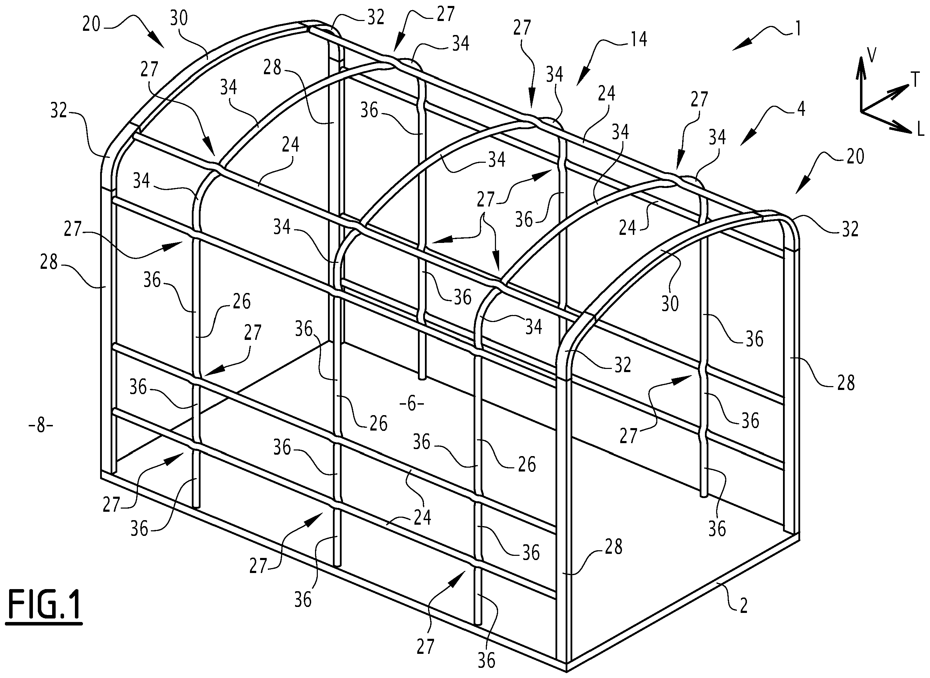

Sur la figure 1, il est représenté un véhicule ferroviaire 1 comprenant un châssis 2 et une caisse 4.

Le véhicule ferroviaire 1 présente une direction longitudinale L, aussi appelée direction de circulation. Le véhicule ferroviaire 1 est alors configuré pour se déplacer selon la direction longitudinale L par exemple sur des rails, non représentés. On définit également une direction verticale V, sensiblement perpendiculaire à la direction longitudinale L, et une direction transversale T sensiblement perpendiculaire à la direction longitudinale L et à la direction verticale V.

Dans la description, les termes « sur », « sous », « au-dessus », « en-dessous », « supérieur », « inférieur » sont définis par rapport à une direction d'élévation du véhicule ferroviaire 1, qui est la direction verticale V lorsque véhicule ferroviaire 1 circule sur des rails horizontaux (non représentés).

Le châssis 2 comprend (non représentés) des bogies comprenant des roues disposées sur des rails. Le châssis 2 est configuré pour supporter la caisse 4 disposée au-dessus du châssis 2.

La caisse 4 du véhicule ferroviaire 1 définit un espace intérieur 6 à la caisse 4 et un espace extérieur 8 à la caisse 4. L'espace intérieur 6 à la caisse 4 forme par exemple un compartiment de réception de passagers, dans lequel des passagers, non représentés, sont situés. En complément ou en variante, l'espace intérieur 6 reçoit des équipements.

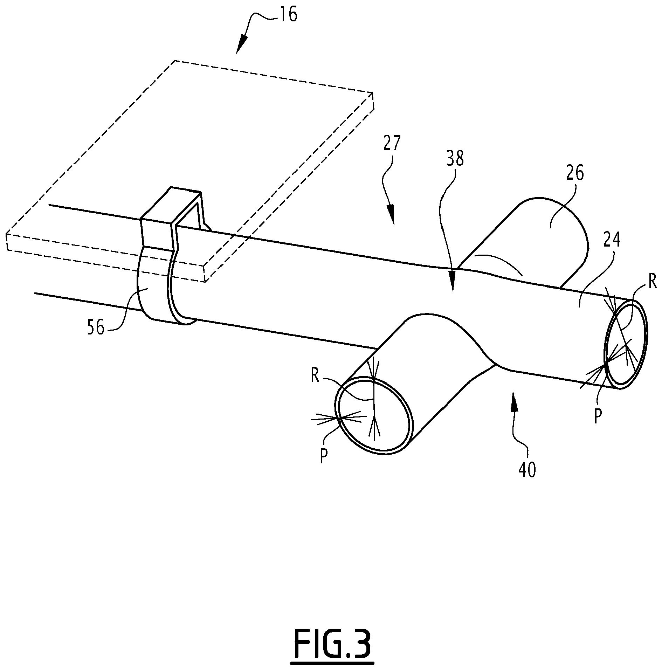

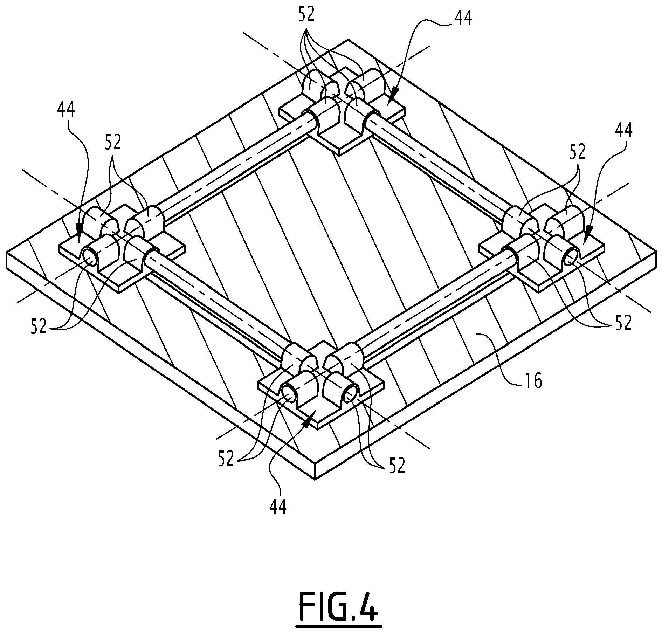

La caisse 4 comprend une armature ajourée 14 et des parements 16 fixés sur l'armature ajourée 14. Les parements 16 sont visibles sur les figures 3 et 4 et sont décrits ci-dessous.

L'armature ajourée 14 est une structure comprenant par exemple des arceaux d'extrémités 20, des tubes longitudinaux 24, des tubes de liaison 26 et des raccords 27.

Les arceaux d'extrémités 20 sont disposés au niveau d'une extrémité avant et d'une extrémité arrière de la caisse 4, selon la direction longitudinale L.

Chaque arceau d'extrémité 20 forme un profil de « U » renversé. Chaque arceau d'extrémité 20 comprend par exemple deux montants verticaux 28, une traverse centrale 30 sensiblement horizontale et deux éléments d'angle 32. Les éléments d'angle 32 relient chacun une extrémité supérieure du montant vertical 28 respective à la traverse centrale 30. Les montants verticaux 28 et la traverse centrale 30 sont par exemple des profilés de section rectangulaire.

Les tubes longitudinaux 24 et les tubes de liaison 26 sont disposés par exemple au niveau des parois latérales et au niveau d'un pavillon de la caisse 4.

Les tubes longitudinaux 24 s'étendent selon la direction longitudinale L. Dans l'exemple de la figure 1, les tubes longitudinaux 24 sont non courbés, c'est-à-dire que les tubes longitudinaux 24 s'étendent parallèlement à la direction longitudinale L.

Les tubes de liaison 26 sont par exemple disposés sensiblement perpendiculaires aux tubes longitudinaux 24. En d'autres termes, les tubes de liaison 26 croisent les tubes longitudinaux 24.

Les tubes de liaison 26 forment en section transversale un profil d'un « U » renversé, c'est-à-dire qu'ils forment des arceaux entre les arceaux d'extrémités 20 de l'extrémité avant et de l'extrémité arrière selon la direction longitudinale L. Les tubes de liaison 26 comprennent des tronçons courbés 34 et des tronçons droits 36. Chaque tube de liaison 26 comporte, par exemple, au niveau d'une première paroi latérale de la caisse 4, un tronçon droit 36, suivi par trois tronçons courbés 34 au niveau du pavillon et, au niveau d'une deuxième paroi latérale de la caisse 4 opposée à la première paroi latérale, un tronçon droit 36.

Typiquement, dans l'exemple de la figure 1, un arceau d'un tube de liaison 26 est une pièce unique, c'est-à-dire les parties courbées 34 et les parties non courbées 36 formant un arceau constituent un tube de liaison 26 d'un seul tenant.

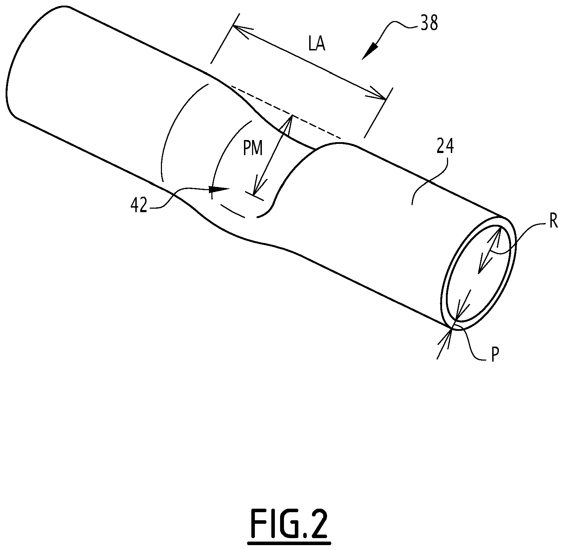

Comme visible en particulier sur les figures 2 et 3, les tubes longitudinaux 24 et les tubes de liaison 26 sont des éléments tubulaires présentant des sections circulaires. Les sections circulaires présentent un rayon R extérieur. La dimension du rayon R du tube 24, 26 est par exemple sélectionnable selon une dimension du tube 24, 26 à insérer. Le rayon R est par exemple compris entre 2 cm et 5 cm.

Les sections circulaires sont délimitées par des parois de tube. Chaque paroi de tube présente une épaisseur P. L'épaisseur P du tube 24, 26 est fonction d'un diamètre du fil fusible utilisé multiplié par le nombre de fils. L'épaisseur P est par exemple comprise entre 0,1 mm (par exemple, diamètre d'un fil fin et un fil seulement) et 50 mm (par exemple, diamètre d'un fil gros ou/et plusieurs fils utilisés). Dans un exemple particulier, l'épaisseur P est comprise entre 3 mm et 5 mm.

Les tubes longitudinaux 24 et les tubes de liaison 26 sont formés à partir de fils fusibles destinés à être liés les uns aux autres et de fils structurants destinés à s'interposer entre les fils fusibles.

Les fils fusibles sont distincts des fils structurants. Plus précisément, les tubes longitudinaux 24 et les tubes de liaison 26 sont formés par tressage ou liage des fils fusibles et des fils structurants, puis par liaison des fils fusibles entre eux et avec les fils structurants.

Les fils fusibles des tubes longitudinaux 24 et des tubes de liaison 26 sont agencés en une pluralité de couches tressées emboitées les unes sur les autres.

Par « fils fusibles », il est entendu des fils qui sont propres à être ramollis par chauffage. Les fils fusibles sont configurés pour être assemblés entre eux par chauffage, par exemple au moyen d'un four ou d'un pistolet à air chaud.

Les fils fusibles comprennent typiquement une résine fusible. Les fils fusibles sont par exemple constitués d'un polymère thermoplastique, tel que polyamide (PA), polyamide-imide (PAI), polyoléfine telle qu'un polyéthylène (PE) ou un polypropylène (PP), polyester, ou un mélange de celles-ci.

Par « fils structurants », il est entendu des fils qui présentent une température de fusion supérieure à la température de fusion des fils fusibles, notamment au moins 10% supérieure à la température de fusion des fils fusibles.

Les fils structurants sont par exemple des fils de polymères organiques avec une température de transition vitreuse plus élevée que celles des fils fusibles ou inorganiques (carbone, verre, basalte, etc..).

Les tubes longitudinaux 24 et les tubes de liaison 26 sont assemblés entre eux par chauffage et/ou par piquage transverse au niveau de liaison des fils tubes par un fil structurant et/ou fusible au niveau des raccords 27.

Chaque raccord 27 connecte ainsi un tube longitudinal 24 avec un tube de liaison 26.

Selon un premier mode de réalisation du raccord 27, représenté en particulier sur les figures 2 et 3, chaque raccord 27 comprend une première partie 38 de raccordement et une deuxième partie 40 de raccordement.

Comme visible en particulier sur la figure 2, la première partie 38 du raccord 27 forme une gorge 42. La gorge 42 présente une forme d'encoche qui débouche latéralement par rapport à une direction d'extension du tube longitudinal 24. La gorge 42 présente une profondeur maximale PM et une longueur LA selon une direction d'extension du tube longitudinal 24. La profondeur maximale PM de la gorge 42 est par exemple comprise entre 0,8 fois et 1,2 fois le rayon R. La longueur LA est par exemple comprise entre 1 fois et 3 fois le rayon R.

La première partie 38 de raccordement du tube longitudinal 24 reçoit le tube de liaison 26 dans la gorge 42. Le tube longitudinal 24 et le tube de liaison 26 sont raccordés directement, sans élément intermédiaire entre le tube longitudinal 24 et le tube de liaison 26 au niveau du raccord 27, par fusion partielle entre les tubes 24, 26. Par exemple, le tube longitudinal 24 est disposé perpendiculaire au tube de liaison 26.

En complément, comme représenté sur la figure 3, la deuxième partie 40 du tube de liaison 26 forme une gorge qui est complémentaire à la gorge 42, qui reçoit la première partie 38 de raccordement au niveau de la gorge 42. En d'autres termes, la deuxième partie 40 forme une gorge qui présente la forme et les dimensions de la gorge 42 de la première partie 38 de raccordement.

En variante, le tube de liaison 26 comprend la deuxième partie 40 de raccordement et le tube longitudinal 24 comprend la première partie 38 de raccordement.

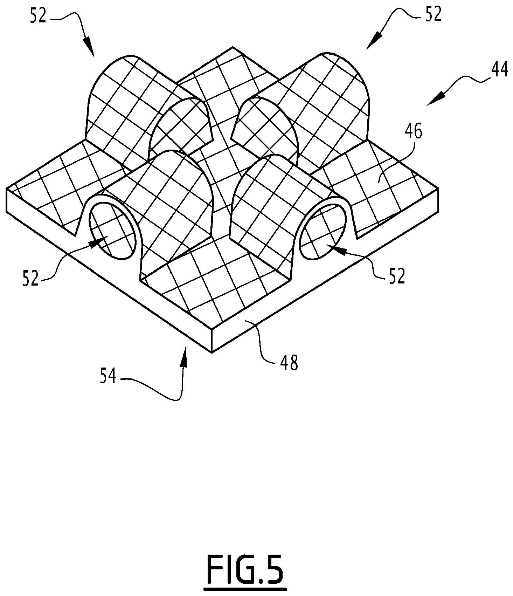

Selon un deuxième mode de réalisation du raccord 27, représenté en particulier sur les figures 4 et 5, le raccord 27 comprend une interconnexion 44 rapportée d'une part entre deux tronçons du tube longitudinal 24 et d'autre part, entre deux tronçons 36 du tube de liaison 26.

L'interconnexion 44 est par exemple un élément composite formé de deux types de fils différents, notamment de fils fusibles et de fils structurants tels que décrits cidessus. Les fils structurants forment par exemple un réseau tissé, comme représenté par la hachure 46 sur la figure 5.

L'interconnexion 44 est par exemple formée par tissage d'un fil de trame selon une première direction, et d'un fil de chaîne selon une deuxième direction. La première et deuxième direction forment par exemple un angle sensiblement perpendiculaire entre eux.

L'interconnexion 44 comprend par exemple les mêmes matériaux que les tubes 24, 26 ou un matériau différent en fonction des besoins de tenue mécanique ou autre requis important. Par exemple, le tube 24, 26 et l'interconnexion sont d'un matériau composite.

L'interconnexion 44 connecte des tubes longitudinaux 24 et des tubes de liaison 26.

L'interconnexion 44 comprend une base plane 48 et au moins deux poches, par exemple quatre poches 52, faisant saillie par rapport à la base plane 48.

La base 48 présente un contour en forme de parallélépipède rectangle. Les poches 52 font saillie à partir d'une première face de la base 48. Une deuxième face de la base 48, opposée à la première face, définit une surface de fixation 54 de parement.

Chaque poche 52 définit une cavité de réception d'un tronçon de tube 24, 26, présentant ici une section circulaire. La cavité présente une forme complémentaire à l'extrémité d'un tronçon de tube longitudinal 24 ou de tube de liaison 26.

Deux poches 52 parmi les quatre poches 52 reçoivent chacune une extrémité d'un tronçon de tube longitudinal 24 et deux autres poches 52 reçoivent chacune une extrémité d'un tronçon de tube de liaison 26.

Dans l'exemple de la figure 4, chaque poche 52 est disposée perpendiculaire par rapport à deux poches 52 adjacentes.

Typiquement, la caisse 4 comprend un ou plusieurs raccords 27 selon le premier mode de réalisation et un ou plusieurs raccords 27 selon le deuxième mode de réalisation.

Le parement 16 est une tôle par exemple formée d'un matériau métallique, tel qu'aluminium ou acier. Typiquement, la caisse 4 comprend une pluralité de parements 16 obturant les ouvertures définies dans l'armature ajourée 14 entre les tubes 24, 26.

Les parements 16 sont connectés à l'armature ajourée 14. Plus précisément, le parement 16 est fixé sur la surface de fixation 54 de l'interconnexion 44, par exemple par collage ou rivetage.

Les parements 16 sont en outre connectés aux tubes longitudinaux 24 ou aux tubes de liaison 26 par des éléments de clipage 56 (par exemple visible sur la figure 3). Les éléments de clipage 56 sont par exemple fixés par collage aux parements 16 et clipsés aux tubes longitudinaux 24 ou aux tubes de liaison 26.

Le parement 16 est par exemple un parement extérieur formant une surface extérieure de la caisse 4 par rapport à l'espace intérieur 6 à la caisse 4. En variante ou en complément, au moins un parement 16 est un parement intérieur délimitant l'espace intérieur 6 à la caisse 4.

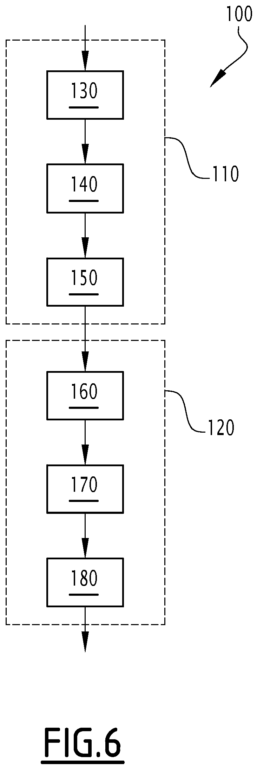

Un procédé 100 de production de la caisse 4 de véhicule ferroviaire 1 va à présent être décrit, en référence à la figure 6.

Le procédé 100 comprend une phase initiale 110 de production des tubes longitudinaux 24 et des tubes de liaison 26, suivie d'une phase d'assemblage 120 de la caisse 4.

La phase de production 110 comprend une étape 130 d'assemblage des fils fusibles et des fils structurants, une étape 140 de chauffage des fils fusibles et une étape 150 de découpe des tubes longitudinaux 24 et des tubes de liaison 26.

Lors de l'étape d'assemblage 130, les fils structurants et les fils fusibles sont avantageusement tissés et/ou tressés pour former l'ossature des tubes longitudinaux 24 et des tubes de liaison 26. Par exemple, les fils structurants sont tissés entre eux en combinant un fil de trame selon une première direction avec un fil de chaîne selon une deuxième direction. A la fin de l'étape d'assemblage 130, les fils structurants et les fils fusibles présentent un réseau assemblé en forme tubulaire.

L'étape d'assemblage 130 est par exemple mise en oeuvre par une machine de tissage et/ou de tressage prévue à cet effet.

Lors de l'étape de chauffage 140, les fils fusibles sont ramollis ou fondus par application de chaleur sur les fils fusibles. Les fils fusibles chauffés sont assemblés entre eux et se fixent sur les fils structurants. A la fin de l'étape 140, les tubes longitudinaux 24 et les tubes de liaison 26 sont formés.

Lors de l'étape de découpe 150, après un refroidissement des tubes longitudinaux 24 et des tubes de liaison 26, les tubes longitudinaux 24 et les tubes de liaison 26 sont coupés transversalement. La longueur exigée des tubes longitudinaux 24 et des tubes de liaison 26, par exemple en fonction de la taille souhaitée de la caisse 4, est choisie lors de l'étape de découpe 150.

L'étape de découpe 150 est mise en œuvre par une machine de découpe prévue à cet effet. L'étape de découpe 150 est optionnelle.

La phase d'assemblage 120 de la caisse 4 comprend une étape 160 de fourniture de tubes longitudinaux 24 et de tubes de liaison 26, une étape 170 de connexion des tubes longitudinaux 24 avec des tubes de liaison 26 et une étape 180 de fixation de parements 16.

Lors de l'étape de fourniture 160 des tubes longitudinaux 24 et des tubes de liaison 26, les tubes 24, 26 sont par exemple livrés à un lieu de montage, par exemple par un camion ou par un système de transport d'un site. Dans certains cas, le lieu de production (phase 110) correspond au lieu de montage de la caisse 4.

Lors de l'étape de connexion 170, les tubes longitudinaux 24 sont connectés avec les tubes de liaison 26 au niveau des raccords 27 pour former l'armature ajourée 14.

La première partie 38 et la deuxième partie 40 du raccord 27 sont formées dans les tubes longitudinaux 24 et dans les tubes de liaison 26. En particulier, la gorge 42 est par exemple formée par un moule adapté à l'établissement de la gorge 42, par chauffage du tube correspondant dans le moule.

La première partie 38 du raccord 27 est introduite dans la deuxième partie 40 du raccord 27. La gorge 42 reçoit par exemple la gorge complémentaire du tube longitudinal 24 ou du tube de liaison 26. Une connexion entre le tube longitudinal 24 et le tube de liaison 26 est établie avantageusement par chauffage du raccord 27, par exemple au moyen d'un pistolet à air chaud.

En complément, lors de l'étape de connexion 170, l'interconnexion 44 est montée entre les tubes longitudinaux 24 et les tubes de liaison 26 pour connecter les tubes longitudinaux 24 et les tubes de liaison 26. Les poches 52 de l'interconnexion 44 reçoivent chacun un tube parmi les tubes longitudinaux 24 et les tubes de liaison 26, par exemple de manière à agencer les tubes longitudinaux 24 et les tubes de liaison 26 perpendiculaires entre eux.

A la fin de l'étape de connexion 170, l'armature ajourée 14 comprenant les tubes longitudinaux 24 et les tubes de liaison 26, est établie.

Lors de l'étape de fixation 180 de parements 16, les parements 16 sont fixés entre les tubes longitudinaux 24 et les tubes de liaison 26.

Les parements 16 sont fixés sur la surface de fixation 54 de l'interconnexion 44, par exemple par collage ou rivetage. Les parements 16 sont en outre connectés aux tubes longitudinaux 24 ou aux tubes de liaison 26 par les éléments de clipage 56. Les éléments de clipage 56 sont par exemple fixés par collage aux parements 16 et ensuite clipsés aux tubes longitudinaux 24 ou aux tubes de liaison 26.

On conçoit que la taille et forme de la caisse 4 selon l'invention est facilement adaptable, puisque la structure de l'armature constituée de tubes est modulaire. Le gabarit du véhicule ferroviaire 1 est donc facilement adaptable selon les exigences structurelles du réseau ferroviaire sur lequel le véhicule est destiné à circuler. En outre, par exemple le nombre et taille de fenêtres et portes du véhicule ferroviaire 1 est facilement adaptable.

Il n'est donc pas nécessaire de concevoir pour chaque véhicule ou même pour chaque type de caisse un moule spécifique pour chaque variation de forme ou taille d'un élément de caisse.

Le poids de la caisse 4 est réduit, notamment par l'utilisation de matériaux composites. Typiquement, le poids est réduit d'environ 15%. En conséquence, des coûts d'opération du véhicule ferroviaire 1 sont réduits.

En outre, la production de la caisse 4 est plus facile et moins coûteuse. En particulier, par exemple le tissage des tubes longitudinaux 24 et des tubes de liaison 26 permet de facilement modifier des tailles et formes des tubes longitudinaux 24 et des tubes de liaison 26 de la caisse 4.

## Revendications

1. Caisse (4) de véhicule ferroviaire (1), la caisse (4) comprenant une armature ajourée (14) comprenant des tubes longitudinaux (24), des tubes de liaison (26) croisant les tubes longitudinaux (24) et des raccords (27) connectant des tubes longitudinaux (24) et des tubes de liaison (26), la caisse (4) comprenant en outre des parements (16) s'étendant entre les tubes longitudinaux (24) et les tubes de liaison (26),
**caractérisé en ce que** les tubes longitudinaux (24) et les tubes de liaison (26) comportent des fils fusibles assemblés entre eux par chauffage.

2. Caisse (4) de véhicule ferroviaire (1) selon la revendication 1, dans laquelle les tubes longitudinaux (24) et les tubes de liaison (26) comprennent des fils structurants non fusibles, les fils structurants étant distincts des fils fusibles.

3. Caisse (4) de véhicule ferroviaire (1) selon la revendication 2, dans laquelle les fils fusibles sont des fils de polymère thermoplastique, et
dans laquelle les fils structurants comprennent des fibres inorganiques appartenant au moins à l'un des éléments du groupe constitué par :
- des fibres de verre ;
- des fibres de carbone, et
- des fibres de basalte.

4. Caisse (4) de véhicule ferroviaire (1) selon l'une quelconque des revendications 1 à 3, dans laquelle les fils fusibles sont agencés en une pluralité de couches tissées et/ou tressées.

5. Caisse (4) de véhicule ferroviaire (1) selon l'une quelconque des revendications 1 à 4, dans laquelle au moins un tube parmi les longitudinaux (24) et les tubes de liaison (26) présente une section circulaire.

6. Caisse (4) de véhicule ferroviaire (1) selon l'une quelconque des revendications 1 à 5, dans laquelle le raccord (27) comprend une première partie (38) de raccordement d'un premier tube parmi les tubes longitudinaux (24) et les tubes de liaison (26), la première partie (38) de raccordement formant une gorge (42) configurée pour recevoir un deuxième tube parmi les tubes longitudinaux (24) et les tubes de liaison (26).

7. Caisse (4) de véhicule ferroviaire (1) selon la revendication 6, dans laquelle le deuxième tube comprend au moins une deuxième partie (40) de raccordement formant une gorge complémentaire configurée pour recevoir la première partie (38) de raccordement au niveau de la gorge (42).

8. Caisse (4) de véhicule ferroviaire (1) selon l'une quelconque des revendications 1 à 7, dans laquelle le raccord (27) comprend au moins une interconnexion (44) des tubes longitudinaux (24) et des tubes de liaison (26), l'interconnexion (44) définissant au moins une poche (52) recevant une extrémité d'un tube longitudinal (24) et au moins une poche (52) additionnelle recevant une extrémité d'un tube de liaison (26).

9. Caisse (4) de véhicule ferroviaire (1) selon la revendication 8, dans laquelle l'interconnexion (44) présente une surface de fixation (54) de parement, sur laquelle un parement (16) est monté.

10. Caisse (4) de véhicule ferroviaire (1) selon la revendication 8 ou 9, dans laquelle l'interconnexion (44) est formée par tissage d'un fil de trame selon une première direction, et d'un fil de chaîne selon une deuxième direction.

11. Caisse (4) de véhicule ferroviaire (1) selon l'une quelconque des revendications 8 à 10, dans laquelle l'interconnexion (44) est formée de fils d'au moins deux matériaux différents.

12. Caisse (4) de véhicule ferroviaire (1) selon l'une quelconque des revendications 1 à 11, dans laquelle les parements (16) sont connectés aux tubes longitudinaux (24) et/ou aux tubes de liaison (26) par des éléments de clipage (56).

13. Procédé (100) de production d'une caisse (4) de véhicule ferroviaire (1) selon l'une quelconque des revendications 1 à 12, le procédé (100) comprenant une phase d'assemblage (120) comprenant :
- une étape (160) de fourniture de tubes longitudinaux (24) et de tubes de liaison (26) réalisés de fils fusibles assemblés entre eux par chauffage,
- une étape (170) de connexion des tubes longitudinaux (24) avec des tubes de liaison (26) au niveau de raccords (27) pour former une armature ajourée (14), et
- une étape (180) de fixation de parements (16) entre les tubes longitudinaux (24) et les tubes de liaison (26).

14. Procédé (100) de production selon la revendication 13, le procédé (100) comprenant une phase initiale (110) de production des tubes longitudinaux (24) et des tubes de liaison (26) comprenant :
- une étape (130) d'assemblage des fils fusibles,
- une étape (140) de chauffage des fils fusibles,
- une étape (150) de découpe des tubes à longueur.

15. Procédé (100) de production selon la revendication 13 ou 14, le raccord (27) comprenant une première partie (38) de raccordement d'un premier tube parmi les tubes longitudinaux (24) et les tubes de liaison (26), la première partie (38) de raccordement formant une gorge (42) configurée pour recevoir un deuxième tube parmi les tubes longitudinaux (24) et les tubes de liaison (26),
dans lequel, lors de l'étape de connexion (170), la gorge (42) reçoit un deuxième tube parmi les tubes longitudinaux (24) et les tubes de liaison (26).

## Patentansprüche

1. Wagenkasten (4) eines Schienenfahrzeugs (1), der Wagenkasten (4) umfassend einen durchbrochenen Rahmen (14), umfassend Längsrohre (24), Verbindungsrohre (26), die die Längsrohre (24) kreuzen, und Anschlussstücke (27), die die Längsrohre (24) und die Verbindungsrohre (26) verbinden, der Wagenkasten (4) ferner umfassend Verkleidungen (16), die sich zwischen den Längsrohren (24) und den Verbindungsrohren (26) erstrecken,
**dadurch gekennzeichnet, dass** die Längsrohre (24) und die Verbindungsrohre (26) schmelzbare Fäden aufweisen, die untereinander durch Erhitzen zusammengefügt sind.

2. Wagenkasten (4) eines Schienenfahrzeugs (1) nach Anspruch 1, wobei die Längsrohre (24) und die Verbindungsrohre (26) nicht schmelzbare Strukturfäden umfassen, wobei die Strukturfäden von den schmelzbaren Fäden verschieden sind.

3. Wagenkasten (4) eines Schienenfahrzeugs (1) nach Anspruch 2, wobei die schmelzbaren Fäden aus thermoplastischem Polymer sind, und
wobei die Strukturfäden anorganische Fasern umfassen, die zu mindestens einem der Elemente aus der Gruppe gehören, bestehend aus:
- Glasfasern;
- Kohlenstofffasern und
- Basaltfasern.

4. Wagenkasten (4) eines Schienenfahrzeugs (1) nach einem der Ansprüche 1 bis 3, wobei die Schmelzfäden in einer Vielzahl von gewebten und/oder geflochtenen Lagen angeordnet sind.

5. Wagenkasten (4) eines Schienenfahrzeugs (1) nach einem der Ansprüche 1 bis 4, wobei mindestens eines von den Längsrohren (24) und den Verbindungsrohren (26) einen kreisförmigen Querschnitt aufweist.

6. Wagenkasten (4) eines Schienenfahrzeugs (1) nach einem der Ansprüche 1 bis 5, wobei das Anschlussstück (27) einen ersten Abschnitt (38) zum Anschließen eines ersten Rohrs von den Längsrohren (24) und den Verbindungsrohren (26) umfasst, wobei der erste Anschlussabschnitt (38) eine Nut (42) bildet, die konfiguriert ist, um ein zweites Rohr von den Längsrohren (24) und den Verbindungsrohren (26) aufzunehmen.

7. Wagenkasten (4) eines Schienenfahrzeugs (1) nach Anspruch 6, wobei das zweite Rohr mindestens einen zweiten Anschlussabschnitt (40) aufweist, der eine komplementäre Nut bildet, die konfiguriert ist, um den ersten Anschlussabschnitt (38) an der Nut (42) aufnimmt.

8. Wagenkasten (4) eines Schienenfahrzeugs (1) nach einem der Ansprüche 1 bis 7, wobei das Anschlussstück (27) mindestens eine Zwischenverbindung (44) der Längsrohre (24) und der Verbindungsrohre (26) umfasst, wobei die Zwischenverbindung (44) mindestens eine Tasche (52), die ein Ende eines Längsrohrs (24) aufnimmt, und mindestens eine zusätzliche Tasche (52), die ein Ende eines Verbindungsrohrs (26) aufnimmt, definiert.

9. Wagenkasten (4) eines Schienenfahrzeugs (1) nach Anspruch 8, wobei die Zwischenverbindung (44) eine Verkleidungsbefestigungsfläche (54) aufweist, an der eine Verkleidung (16) montiert ist.

10. Wagenkasten (4) eines Schienenfahrzeugs (1) nach Anspruch 8 oder 9, wobei die Zwischenverbindung (44) durch Weben eines Schussfadens in einer ersten Richtung und eines Kettfadens in einer zweiten Richtung gebildet ist.

11. Wagenkasten (4) eines Schienenfahrzeugs (1) nach einem der Ansprüche 8 bis 10, wobei die Zwischenverbindung (44) aus Fäden aus mindestens zwei verschiedenen Materialien gebildet ist.

12. Wagenkasten (4) eines Schienenfahrzeugs (1) nach einem der Ansprüche 1 bis 11, wobei die Verkleidungen (16) durch Klammerelemente (56) mit den Längsrohren (24) und/oder den Verbindungsrohren (26) verbunden sind.

13. Verfahren (100) zur Herstellung eines Wagenkastens (4) eines Schienenfahrzeugs (1) nach einem der Ansprüche 1 bis 12, das Verfahren (100) umfassend eine Montagephase (120), umfassend:
- einen Schritt (160) eines Bereitstellens von Längsrohren (24) und Verbindungsrohren (26), die aus schmelzbaren Fäden hergestellt sind, die durch Erhitzen miteinander verbunden werden,
- einen Schritt (170) eines Verbindens der Längsrohre (24) mit Verbindungsrohren (26) auf Höhe von Anschlussstücken (27), um einen durchbrochenen Rahmen (14) zu bilden, und
- einen Schritt (180) eines Befestigens von Verkleidungen (16) zwischen den Längsrohren (24) und den Verbindungsrohren (26).

14. Verfahren (100) zur Herstellung nach Anspruch 13, das Verfahren (100) umfassend eine Anfangsphase (110) der Herstellung von Längsrohren (24) und Verbindungsrohren (26), umfassend:
- einen Schritt (130) eines Zusammenfügens der Schmelzfäden,
- einen Schritt (140) eines Erhitzens der Schmelzfäden,
- einen Schritt (150) eines Zuschneidens der Rohre.

15. Verfahren (100) zur Herstellung nach Anspruch 13 oder 14, das Anschlussstück (27) umfassend einen ersten Abschnitt (38) zum Verbinden eines ersten Rohrs von den Längsrohren (24) und den Verbindungsrohren (26), wobei der erste Verbindungsabschnitt (38) eine Nut (42) bildet, die konfiguriert ist, um ein zweites Rohr von den Längsrohren (24) und den Verbindungsrohren (26) aufzunehmen,
wobei in dem Verbindungsschritt (170) die Nut (42) ein zweites Rohr von den Längsrohren (24) und den Verbindungsrohren (26) aufnimmt.

## Claims

1. A railway vehicle (1) body (4), the body (4) comprising an openwork body shell (14) comprising longitudinal tubes (24), linking tubes (26) crossing the longitudinal tubes (24), and fittings (27) connecting longitudinal tubes (24) and linking tubes (26), the body (4) further comprising claddings (16) extending between the longitudinal tubes (24) and the linking tubes (26), **characterized in that** the longitudinal tubes (24) and the linking tubes (26) comprise fusible yarns assembled one to another by heating.

2. The railway vehicle (1) body (4) according to claim 1, wherein the longitudinal tubes (24) and linking tubes (26) comprise non-fusible structural yarns, the structural yarns being distinct from the fusible yarns.

3. The railway vehicle (1) body (4) according to claim 2, wherein the fusible yarns are thermoplastic polymer yarns, and
wherein the structural yarns comprise inorganic fibres belonging to at least one of the elements of the group constituted by:
- glass fibres;
- carbon fibres; and
- basalt fibres.

4. The railway vehicle (1) body (4) according to any one of the claims 1 to 3, wherein the fusible yarns are arranged into a plurality of woven and/or braided layers.

5. The railway vehicle (1) body (4) according to any one of the claims 1 to 4, wherein at least one tube from among the longitudinal tubes (24) and the linking tubes (26) has a circular cross-section.

6. The railway vehicle (1) body (4) according to any one of the claims 1 to 5, wherein the fitting (27) comprises a first connective part (38) for connecting a first tube from among the longitudinal tubes (24) and the linking tubes (26), the first connective part (38) forming a recess (42) configured to receive a second tube from among the longitudinal tubes (24) and the linking tubes (26).

7. The railway vehicle (1) body (4) according to claim 6, wherein the second tube comprises at least one second connective part (40) forming a complementary recess configured to receive the first connective part (38) at the recess (42).

8. The railway vehicle (1) body (4) according to any one of the claims 1 to 7, wherein the fitting (27) comprises at least one interconnection (44) between the longitudinal tubes (24) and the linking tubes (26), the interconnection (44) defining at least one pocket (52) receiving an end of a longitudinal tube (24) and at least one additional pocket (52) receiving an end of a linking tube (26).

9. The railway vehicle (1) body (4) according to claim 8, wherein the interconnection (44) has a cladding fastening surface (54), onto which a cladding (16) is installed.

10. The railway vehicle (1) body (4) according to claim 8 or 9, wherein the interconnection (44) is formed by weaving a weft yarn along a first direction, and a warp yarn along a second direction.

11. The railway vehicle (1) body (4) according to any one of the claims 8 to 10, wherein the interconnection (44) is formed from yarns of at least two different materials.

12. The railway vehicle (1) body (4) according to any one of the claims 1 to 11, wherein the claddings (16) are connected to the longitudinal tubes (24) and/or to the linking tubes (26) by clipping elements (56).

13. A method (100) for manufacturing a railway vehicle (1) body (4) according to any one of the claims 1 to 12, the method (100) comprising a phase of assembling (120) comprising:
- a step (160) of providing longitudinal tubes (24) and linking tubes (26) made from fusible yarns assembled one to another by heating,
- a step (170) of connecting longitudinal tubes (24) with linking tubes (26) at fittings (27) to form an openwork body shell (14), and
- a step (180) of fastening claddings (16) between the longitudinal tubes (24) and the linking tubes (26).

14. The method (100) for manufacturing according to claim 13, the method (100) comprising an initial phase (110) of producing longitudinal tubes (24) and linking tubes (26) comprising:
- a step (130) of assembling the fusible yarns,
- a step (140) of heating the fusible yarns,
- a step (150) of cutting the tubes to the right length.

15. The method for manufacturing according to claim 13 to 14, the fitting (27) comprising a first connective part (38) for connecting a first tube from among the longitudinal tubes (24) and the linking tubes (26), the first connective part (38) forming a recess (42) configured to receive a second tube from among the longitudinal tubes (24) and the linking tubes (26), wherein, during the step of connecting (170), the recess (42) receives a second tube from among the longitudinal tubes (24) and the linking tubes (26).
